# EUROPEAN PATENT APPLICATION

(11) **EP 3 287 658 A1**
(43) Date of publication of application: **28.02.2018**
(21) Application number: 16783166.8
(22) Date of filing: 19.04.2016
(51) Int. Cl.: F16D 65/18, F16D 121/04, F16D 125/06

(54) **PISTON FOR DISC BRAKE DEVICE**

(30) Priority: 20.04.2015 JP 2015085891
(71) Applicant: Akebono Brake Industry Co., Ltd., Tokyo 103-8534 (JP)
(72) Inventor: SUZUKI, Tsuyoshi, Tokyo 103-8534 (JP); MORIO, Takefumi, Tokyo 103-8534 (JP)
(74) Representative: Grünecker Patent- und Rechtsanwälte PartG mbB
(86) International application number: PCT/JP2016/062424
(87) International publication number: WO 2016/171145

(57) **Abstract**

An internal reinforcement body (14) is provided inside a piston (16) while being connected to the inner peripheral surface of a circular cylindrical wall section (17) and to the inner surface of a bottom wall section (18). A plurality of reinforcement walls (26a, 26b) constituting the outer diameter-side portion of the internal reinforcement body (14) are not arranged radially but are arranged while being tilted relative to the radial direction. Each pair of circumferentially adjacent reinforcement walls (26a, 26b) are tilted in the opposite directions relative to the radial direction, and the inner diameter-side ends of these reinforcement walls (26a, 26b) are connected.

## Description

### Technical Field

The present invention relates to an improvement of a piston for a disc brake device.

### Background Art

Disc brakes are widely used to slow or stop a motor vehicle. When a disc brake is used to slow or stop a vehicle, a pair of pads which are provided so as to hold therebetween a rotor rotating together with a wheel are caused to press against both sides of the rotor by a piston. As a disc brake device like the one described above, a floating-type disc brake device is in use in which the pair of pads described above are supported on a support which is fixed to a suspension system so as to be displaced freely. In the case of this floating-type disc brake, the piston described above is provided only one side (an inboard side which faces a transverse center of a vehicle body with the floating-type disc brake device mounted on the motor vehicle) of the rotor.

In contrast with this floating-type disc brake device, in recent years, opposed-piston-type disc brake devices that pistons are provided at both sides of the rotor and the pair of pads are pressed against both sides of the rotor by these pistons when the disc brakes are used are also widely used particularly on high-performance vehicles for the reason that superior braking force can be obtained therewith.

In these opposed-piston-type disc brake devices, an opposed-piston-type disc brake device described in Patent Literature 1 is shown in Figs. 13 to 14. This opposed-piston-type disc brake device 1 includes a caliper 5 which is made up of an inboard body portion 3 and an outboard body portion 4 in a position where a rotor 2 is held. An inboard cylinder space 6 and an outboard cylinder space 7 are provided in the inboard body portion 3 and the outboard body portion 4, respectively, in such a way that their openings face each other across the rotor 2. Then, an inboard piston 8 and an outboard piston 9 are fitted in the inboard piston space 6 and the outboard piston space 7, respectively, in a fluid-tight fashion and in such a way as to move in an axial direction of the rotor 2. Additionally, an inboard pad 10 is supported in the inboard body portion 3 so as to be displaced in the axial direction of the rotor 2, and an outboard pad 11 is supported in the outboard body portion 4 so as to be displaced in the axial direction of the rotor 2. When braking, a fluid is sent under pressure into the inboard cylinder space 6 and the outboard cylinder space 7, whereby the inboard pad 10 and the outboard pad 11 are pressed against the corresponding sides of the rotor 2 by the inboard piston 8 and the outboard piston 9, respectively.

The inboard and outboard pistons 8, 9 are made of metal and have a bottomed cylindrical shape as a whole, including a cylindrical wall portion 12 having a cylindrical shape and a bottom wall portion 13 having a disc shape. The bottom wall portion 13 closes an axial end side of the cylindrical wall portion 12 which lies on a deeper side of each of the inboard and outboard cylinder spaces 6, 7.

A substantially cylindrical projecting portion 14 is formed at a central portion of an inner surface of the bottom wall portion 13 which makes up each of the inboard and outboard pistons 8, 9. Additionally, a plurality of (six in the illustrated example) straight reinforcement ribs 15, 15 are provided circumferentially at equal intervals on the inner surface of the bottom wall portion 13 so as to extend in a radial direction (radially) to thereby continue to an outer circumferential surface of the projecting portion 14 and an inner circumferential surface of the cylindrical wall portion 12. By adopting this configuration, the inboard and outboard pistons 8, 9 are made so rigid that when braking, the inboard and outboard pistons 8, 9 are prevented from being deformed irrespective of the fact that the pressurized fluid is introduced into the inboard and outboard cylinder spaces 6, 7.

In the case of the inboard and outboard pistons 8, 9 having the conventional construction described above, however, since the straight reinforcement ribs 15, 15 are arranged radially so as to pass through a piston center axis (O), the flexibility in design to make the ensured rigidity and the reduced weight compatible is reduced. Namely, in a case where the individual reinforcement ribs 15, 15 are arranged radially, this radial arrangement determines the lengthwise dimension of each of the reinforcement ribs 15, 15. Therefore, the ensured rigidity and the reduced weight need to be made compatible by changing a circumferential thickness dimension and the number of reinforcement ribs 15, 15 to be provided as required. This reduces the flexibility in design and therefore makes it difficult for the ensured rigidity and the reduced weight of the inboard and outboard pistons 8, 9 to be made compatible at higher levels.

### Prior Art Literature

### Patent Literature

Patent Literature 1: JP 2011-102598 A

### Summary of the Invention

### Problem that the Invention is to Solve

The invention has been made in view of the situations described above to realize a construction for a piston which is incorporated in a disc brake device which enables the ensured rigidity and the reduced weight to be made compatible at higher levels by enhancing the flexibility in design.

### Solution for Problem

The above object of the invention is achieved by the following configurations.
(1) A piston for a disc brake device, which is fitted in a cylinder space formed in a caliper of the disc brake device so as to move in an axial direction, the piston including:
   a cylindrical wall portion having a cylindrical shape; and
   a bottom wall portion closing an end side of the cylindrical wall portion at one end thereof in the axial direction which lies on a deeper side of the cylinder space, wherein
   the piston has a bottomed cylindrical shape as a whole,
   at least three reinforcement walls are provided so as to continue to an inner circumferential surface of the cylindrical wall portion and an inner surface of the bottom wall portion, the reinforcement walls exist not in a radial direction which passes through a piston center axis, and
   an interior reinforcement body, which includes at least the reinforcement walls and is provided radially inwards of the cylindrical wall portion, is rotationally symmetric with respect to the piston center axis as a center thereof.
(2) The piston for a disc brake device according to the above (1), wherein
   radially inward end portions of a pair of the reinforcement walls which are adjacent to each other in a circumferential direction and which are inclined reversely relative to the radial direction are connected together so as to form a combined wall portion.
(3) The piston for a disc brake device according to the above (2), wherein
   a radially inward continuous wall is provided radially inwards of a connecting portion of the radially inward end portions of the pair of the reinforcement walls forming the combined wall portion,
   at least one end portion of the radially inward continuous wall continues to the connecting portion, and
   the radially inward continuous wall forms the interior reinforcement body together with the corresponding reinforcement wall.
(4) The piston for a disc brake device according to the above (3), wherein
   the radially inward continuous wall is disposed in the radial direction which passes through the piston center axis.
(5) The piston for a disc brake device according to the above (3), wherein
   both end portions of the radially inward continuous wall continue to a pair of the connecting portions which are adjacent to each other in the circumferential direction.
(6) The piston for a disc brake device according to any one of the above (1) to (5), wherein
   an axially thickness-wise dimension of the interior reinforcement body from the inner surface of the bottom wall portion gradually increases as the interior reinforcement body extends radially outwards from a center of the bottom wall portion, and
   an axial position of an edge of a radially outer end portion of the interior reinforcement body at the other end thereof in the axial direction which continues to the inner circumferential surface of the cylindrical wall portion is situated in a boundary position between a portion where a fluid pressure is borne and a portion where no fluid pressure is borne on an outer circumferential surface of the cylindrical wall portion or a position which lies closer to the other end side than the boundary position in the axial direction.
(7) The piston for a disc brake device according to the above (1), wherein
   the reinforcement walls are connected into a frame of a regular polygonal shape, and
   the interior reinforcement body is formed by only the reinforcement walls.
(8) The piston for a disc brake device according to any one of the above (1) to (7), wherein
   a closed space is provided in a corner portion of each of the reinforcement walls which exists at a portion held between an axial end portion of the cylindrical wall portion and a radially outer end portion of the bottom wall portion.

### Advantages of the Invention

According to the disc brake device piston of the invention which is configured in the ways described above, the ensured rigidity and the reduce weight can be made compatible at higher levels by enhancing the flexibility in design.

Namely, in the case of the invention, the reinforcement walls which continue to the inner circumferential surface of the cylindrical wall portion and the inner surface of the bottom wall portion which make up the piston and which make up the interior reinforcement body are arranged in such a way that the reinforcement walls do not exist in the radial direction which passes through the piston center axis on the premise that the interior reinforcement body is rotationally symmetric with respect to the piston center axis as the center thereof.

Because of this, according to the invention, the reinforcement walls can be designed with the high flexibility by adopting, for example, the configuration as described under (2) in which the pair of reinforcement walls which lie adjacent to each other in the circumferential direction are inclined reversely relative to the radial direction and the radially inward end portions of both the reinforcement walls are connected together (at the portion other than the piston center) or the configuration in which the lengthwise end portions of the reinforcement walls are made to continue to the inner circumferential surface of the cylindrical wall portion. Namely, in addition to the thickness-wise dimension of the reinforcement walls and the number of reinforcement walls to be provided, the direction in which the reinforcement walls are set (the direction in which the reinforcement walls are inclined relative to the radial direction, the angle at which the reinforcement walls are inclined) and the lengthwise dimension of the reinforcement walls can also be changed as required. Consequently, according to the invention, it is easy to design the disc brake device piston so that the ensured rigidity and the reduced weight are made compatible at higher levels.

According to the configuration described under (2) above, the lengthwise dimension of the reinforcement walls which make up the combined wall portion can be made shorter than when the reinforcement walls are arranged in the radial direction. Therefore, a reduction in weight of the disc brake device piston can be facilitated. In the pairs of reinforcement walls which lie adjacent to each other in the circumferential direction, the pair of reinforcement walls which make up the different combined wall portions are inclined so as to move away from each other as they extend radially inwards. Therefore, a large space can be formed between the combined wall portions which lie adjacent to each other in the circumferential direction. Because of this, a sufficient reduction in weight can be realized. Consequently, as in the configurations described under, for example, (3) to (5) above, even when the radially inward continuous walls are provided radially inwards of the combined wall portions so as to realize a further enhancement in rigidity, a reduction in weight of the disc brake device piston can be realized by suppressing an increase in overall weight thereof.

According to the configuration described under (6) above, the ensured rigidity and the reduced weight of the cylindrical wall portion and the bottom wall portion can be made compatible. In addition, the large spaces can be ensured in the interior of the piston, and therefore, a separate member can also be inserted thereinto. Further, the axial position of the radially outer end portion of the interior reinforcement body is regulated, and therefore, the sufficient rigidity can be ensured for the cylindrical wall portion, thereby making it possible to prevent an occurrence of a deformation in the cylindrical wall portion effectively.

Further, according to the configuration described under (8) above, the closed space is provided in the corner portion of each of the reinforcement walls where the sufficiently high rigidity is provided by being held between the axial end portion of the cylindrical wall portion and the radially outer end portion of the bottom wall portion, and therefore, a reduction in weight of the disc brake device piston can be realized while ensuring the sufficient rigidity.

### Brief Description of Drawings

[Fig. 1] Fig. 1 is a front view of a disc brake device piston showing a first embodiment of the invention.
[Fig. 2] Fig. 2 is a schematic diagram corresponding to the front view of the disc brake device piston shown in Fig. 1.
[Fig. 3] Fig. 3 is a bottom view of the disc brake device piston shown in Fig. 1.
[Fig. 4] Fig. 4 is a side view of the disc brake device piston shown in Fig. 1.
[Fig. 5] Fig. 5 is a sectional view of the disc brake device piston taken along a line (A)-(O)-(A) shown in Fig. 1.
[Fig. 6] Fig. 6 is a perspective view of the disc brake device piston shown in Fig. 1.
[Fig. 7] Fig. 7 is a sectional view, corresponding to Fig. 5, showing a disc brake device piston according to a second embodiment of the invention.
[Fig. 8] Fig. 8 is a schematic view, corresponding to a front view, of a disc brake device piston according to a third embodiment of the invention.
[Fig. 9] Fig. 9 is a schematic view, corresponding to a front view, of a disc brake device piston according to a fourth embodiment of the invention.
[Fig. 10] Fig. 10 is a schematic view, corresponding to a front view, of a disc brake device piston according to a fifth embodiment of the invention.
[Fig. 11] Fig. 11 is a schematic view, corresponding to a front view, of a disc brake device piston according to a sixth embodiment of the invention.
[Fig. 12] Fig. 12 is a schematic view, corresponding to a front view, of a disc brake device piston according to a seventh embodiment of the invention.
[Fig. 13] Fig. 13 is a sectional view showing a conventional opposed-piston-type disc brake device.
[Fig. 14] Fig. 14 is a front view of a piston which is removed from the disc brake device shown in Fig. 13.

### Embodiment for the Invention

### [First Embodiment]

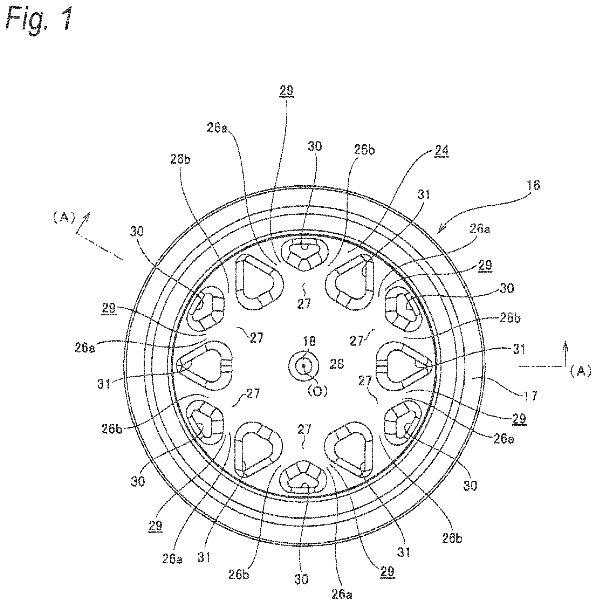

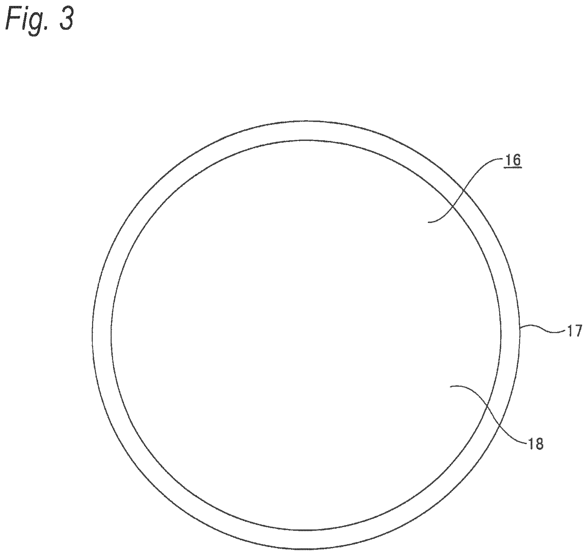

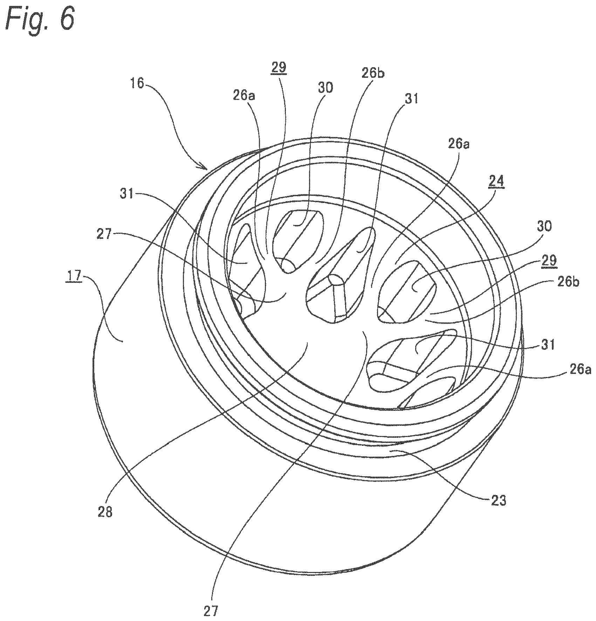

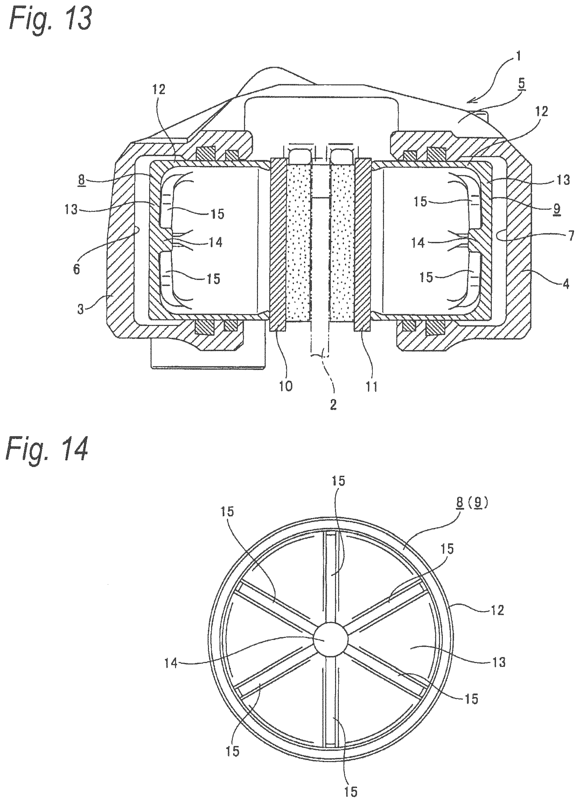

Referring to Figs. 1 to 6, a first embodiment of the invention will be described. As in the case of the piston of the conventional construction shown in Fig. 13, when in use, a piston 16 of a first embodiment is incorporated in an opposed-piston-type disc brake device or a floating-type disc brake device. The overall construction of the opposed-piston-type disc brake device has already been described, and the overall construction of the floating-type disc brake device has widely been known, and the overall constructions of these disc brake devices are not a gist of the invention. Thus, a description of the construction of a disc brake device in which the piston 16 is incorporated will be omitted here. In addition, in a case where the piston 16 of this embodiment is incorporated in the opposed-piston-type disc brake device, the piston 16 can be incorporated as either of an inboard piston and an outboard piston.

The piston 16 is formed into a single integral unit as a whole by cutting and shaping a material of light metal such as aluminum alloy or injecting a thermosetting resin such as phenol resin into such an integral unit. In the case of the first embodiment, the piston 16 includes a cylindrical wall portion 17 having a cylindrical shape and a bottom wall portion 18 having a disc shape and is formed into a bottomed cylindrical shape as a whole.

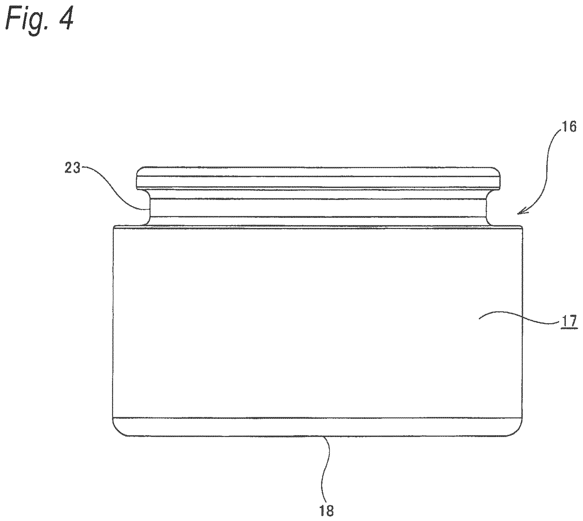

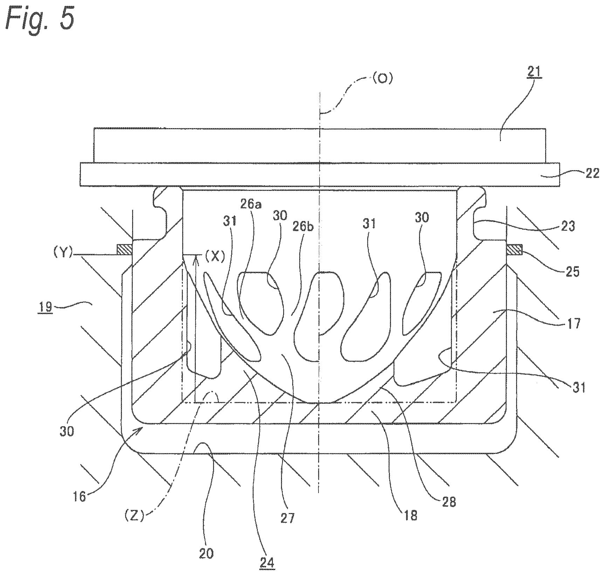

Of these constituent elements of the piston 16, the cylindrical wall portion 17 has an outside diameter dimension which is slightly smaller than a bore diameter dimension of a cylinder space 20 formed in a caliper 19. With the piston 16 fitted in the cylinder space 20 so as to move in an axial direction, the other axial end face (an upper end face in Figs. 4, 5) of the cylindrical wall portion 17 lies close to or is in abutment with a rear surface of a pressure plate 22 which makes up a pad 21. A boot groove 23 is formed along a full length of an outer circumferential surface of the other axial end portion of the cylindrical wall portion 17 so as to be depressed radially inwards. Then, a boot, which is configured to prevent the intrusion of foreign matters into the cylinder space 20, can be fitted between the boot groove 23 and an opening portion of the cylinder space 20.

With the piston 16 fitted in the cylinder space 20, the bottom wall portion 18 closes an axial end side (a lower end side in Figs. 4, 5) of the cylindrical wall portion 17 which is situated on a deeper side of the cylinder space 20. In the case of the first embodiment, an outer surface (an axial side surface) of the bottom wall portion 18 is formed into a flat plane. Although an illustration is omitted, a plurality of depressions can also be formed on the outer surface of the bottom wall portion to reduce the weight of the piston 16.

In particular, in the case of this first embodiment, an interior reinforcement body 24 is provided integrally with the piston 16 inside the piston 16 (radially inwards of the cylindrical wall portion 17). This interior reinforcement body 24 is provided so as to continue individually to an inner circumferential surface of the cylindrical wall portion 17 and an inner surface (the other axial side surface) of the bottom wall portion 18 and prevents an occurrence of a deformation in the cylindrical wall portion 17 and the bottom wall portion 18 irrespective of a stress (a brake fluid pressure) which is exerted on an outer circumferential surface of the cylindrical portion 17 and the outer surface (the axial side surface) of the bottom wall portion 18 when braking. A boundary position between the interior reinforcement body 24 and the cylindrical wall portion 17 and the bottom wall portion 18 is indicted by a chain double-dashed line in Fig. 5. In the case of the first embodiment, the interior reinforcement body 24 is rotationally symmetric with respect to a piston center axis (O) of the piston. The reason for configuring the interior reinforcement body 24 in that way is that the balance in radial rigidity is prevented from being lost (the generation of high rigid portions and low rigid portions is prevented) in circumferential positions on the outer circumferential surface of the cylindrical wall portion 17 due to stress being exerted equally along the length of the outer circumferential surface in the circumferential direction.

The interior reinforcement body 24 makes up an inner circumferential wall and an inner bottom wall of the piston 16 together with the cylindrical wall portion 17 and the bottom wall portion 18. An axial thickness-wise dimension of the interior reinforcement body 24 measured from the inner surface (Z) of the bottom wall portion 18 increases into a smooth curve as it extends radially outwards from a center of the bottom wall portion 18 (a portion of the bottom wall portion 18 which passes through the piston center axis (O)). Because of this, an inner bottom surface of the piston 16 which is made up of the other axial side surface of the interior reinforcement body 24 is formed into a mortar-like shape (or a shape of a concavely depressed surface) whose bottom portion is made up of a central portion through which the piston center axis (O) passes.

In the case of the first embodiment, an axial position (X) of the other axial end edge of a radially outer end portion of the interior reinforcement body 24 which continues to the inner circumferential surface of the cylindrical wall portion 17 is regulated as follows. Namely, this axial position (X) coincides with an axial position (Y) of an axial end edge of a piston seal 25 which is mounted on an axial middle portion of the cylinder space 20 which corresponds to a boundary position between a portion where a fluid pressure is borne and a portion where no fluid pressure is borne on the outer circumferential surface of the cylindrical wall portion 17. By adopting this configuration, the interior reinforcement body 24 is designed to be provided only at radially inward portions of the portions on the outer circumferential surface of the cylindrical wall portion 17 where stress is borne when braking. In other words, the interior reinforcement portion 24 is not provided at radially inward portions of the portions on the outer circumferential surface of the cylindrical wall portion 17 where no stress is borne.

The piston seal 25 has a rectangular cross-sectional shape and is formed into an annular shape as a whole. The piston seal 25 is brought into sliding contact with an outer circumferential surface of an axial middle portion of the cylindrical wall 17 in a fluid-tight fashion so as to move with respect to the outer circumferential surface of the axial middle portion. When the brake is released, the piston seal 25 moves (rolls back) the piston 16 towards the deeper side of the cylinder space 20 by the elastic restoring force.

In the case of the first embodiment, the interior reinforcement body 24 having the function and configuration that have been described above is made up of a plurality of (a total of 12 in this embodiment) reinforcement walls 26a, 26b, a plurality of (six in the illustrated embodiment) radially inward continuous walls 27, 27 and a central reinforcement portion 28.

The reinforcement walls 26a, 26b make up a radially outward portion of the interior reinforcement body 24. The reinforcement walls 26a, 26b are arranged so as not to exist in a radial direction (radially) which passes through the piston center axis (O) in such a state that radially outward end portions (lengthwise end portions) of the reinforcement walls 26a, 26b are made to continue to the inner circumferential surface of the cylindrical wall portion 17 while axial end portions of the reinforcement walls 26a, 26b are made to continue to the inner surface of the bottom wall portion 18.

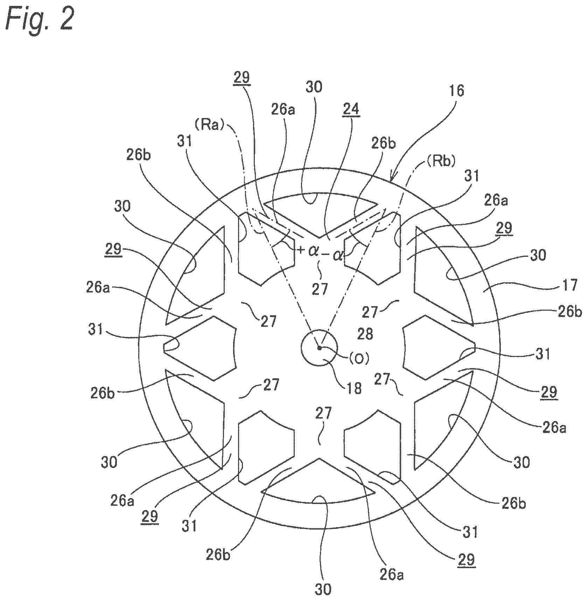

Specifically speaking, in the 12 reinforcement walls 26a, 26b, the six reinforcement walls 26a, 26a are disposed at equal intervals in the circumferential direction while being inclined by a predetermined angle in a predetermined direction relative to the radial direction. In contrast with this, the remaining six reinforcement walls 26b, 26b are disposed at equal intervals in the circumferential direction while being inclined by the same inclination angle as that at which the reinforcement walls 26a, 26 are inclined relative to the radial direction in an opposite direction to the direction in which the reinforcement walls 26a, 26a are inclined. More specifically, the reinforcement walls 26a, 26a are provided in such a state that the reinforcement walls 26a, 26a are inclined by an inclination angle of +α relative to an imaginary line (Ra) in Fig. 2 which denotes the radial direction as they extend radially inwards. Additionally, the reinforcement walls 26b, 26b are provided in such a state that the reinforcement walls 26b, 26b are inclined by an inclination angle of -α relative to an imaginary line (Rb) in Fig. 2 which denotes the radial direction as they extend radially inwards. The inclination of the reinforcement walls 26a, 26b relative to the radial direction means that center lines of the reinforcement walls 26a, 26b are so inclined relative to the radial direction.

Then, the reinforcement walls 26a, 26a and the reinforcement walls 26b, 26b, which are inclined in the opposite directions relative to the radial direction, are disposed alternately in the circumferential direction. In the pairs of reinforcement walls 26a, 26b which lie adjacent to each other in the circumferential direction, radially inward end portions of the pairs of reinforcement walls 26a, 26b which are inclined in directions in which they move towards each other as they extend radially inwards are connected together so as to form combined wall portions 29, 29 having substantially a V-like shape when seen from the front. These combined wall portions 29, 29 are provided at equal intervals in the circumferential direction. An axial thickness-wise dimension of the combined wall portions 29, 29 (the reinforcement walls 26a, 26b) is made to decrease as they extend radially inwards (towards the piston center axis (O)).

In the case of the first embodiment, as a result of the radially outward portion of the interior reinforcement body 24 being configured in the way described above, first space portions 30, 30 and second space portions 31, 31, which are openings which open in the other axial direction, are formed alternately in the circumferential direction at the radially outward portion of the interior reinforcement body 24. Of these first and second space portions, the first space portions 30, 30 are formed at portions held by the pairs of reinforcement walls 26a, 26b which make up the combined wall portions 29, 29. The first space portions 30, 30 are each formed into a shape of an isosceles triangle with a curved base (a fan-like shape in Fig. 2 which is a reference drawing) and are disposed so that a vertical angle lies radially inwards while the base lies radially outwards. In contrast with this, the second space portions 31, 31 are formed between the combined wall portions 29, 29 which lie adjacent to each other in the circumferential direction. The second space portions 31, 31 are each formed into a shape of an isosceles triangle with a curved base (a hexagonal shape in Fig. 2 which is the reference drawing) and are disposed so that a vertical angle lies radially outwards while the base lies radially inwards. In the case of the first embodiment, the first space portions 30, 30 and the second space portions 31, 31 are formed so that their angular corner portions are rounded so as to avoid the concentration of stress thereto. Axial dimensions of the first and second space portions 30, 31 are smaller by a slight amount (on the order one- to two-tenth an overall axial dimension) than an axial dimension of portions of the interior reinforcement body 24 which are offset circumferentially from the first and second space portions 30, 31. Because of this, bottom surfaces (axial side surfaces) of the first and second space portions 30, 31 do not reach the bottom wall portion 18 and are situated slightly nearer to the other axial side than the inner surface of the bottom wall portion 18. By adopting this configuration, even the portions where the first and second space portions 30, 31 are formed can contribute to the enhancement in strength of the bottom wall portion 18.

The radially inward continuous walls 27, 27 make up a radial middle portion of the interior reinforcement body 24 and are disposed radially. Radially outward end portions of the radially inward continuous walls 27, 27 continue to the connecting portions (the radially inward end portions) of the pairs of reinforcement walls 26a, 26b which make up the combined wall portions 29, 29. In the case of the first embodiment, a lengthwise dimension of the radially inward continuous walls 27, 27 is set shorter than lengthwise dimensions of the reinforcement walls 26a, 26b, whereas a thickness-wise dimension of the radially inward continuous walls 27, 27 is set greater than thickness-wise dimensions of the reinforcement walls 26a, 26b. The radially inward continuous walls 27, 27 which are configured in the way described above are provided individually between radially inward end portions of the second space portions 31, 31 in relation to the circumferential direction. As with the reinforcement walls 26a, 26b, an axial thickness-wise dimension of the radially inward continuous walls 27, 27 is made to decrease as they extend radially inwards (towards the piston center axis (O)).

The central reinforcement portion 28 makes up a radially inward portion of the interior reinforcement body 24 and has a substantially circular ring shape when seen from the front. Because of this, the inner surface of the bottom wall portion 18 is exposed to a radially inward side (a circular portion including the piston center axis (O)) of the central reinforcement portion 28. An outer circumferential edge of the central reinforcement portion 28 continues to radially inward end portion of the radially inward continuous walls 27, 27 in six circumferential positions thereof. As with the reinforcement walls 26a, 26b and the radially inward continuous walls 27, 27, an axial thickness-wise dimension of the central reinforcement portion 28 is also made to decrease (to zero at a radially inner end portion) as it extends radially inwards (towards the piston center axis (O)).

In slowing or stopping a vehicle such as a motor vehicle using the disc brake device in which the piston 16 of the first embodiment is incorporated which is configured in the way described heretofore, a hydraulic pressure is introduced into the cylinder space 20 (a pressurized brake oil is sent into the cylinder space 20), so that the piston 16 is pushed out towards the other axial side from the cylinder space 20. This brings the other axial end face of the piston 16 (the cylindrical wall portion 17) into abutment with the rear surface of the pressure plate 22 of the pad 21, whereby a lining of the pad 21 is pressed against a side surface of a rotor. Then, the lining of the pad 21 and the side surface of the rotor are brought into sliding contact with each other, whereby the vehicle is slowed or stopped.

Then, when braking in the way described above, stress generated based on the brake oil is exerted on the outer circumferential surface of the cylindrical wall portion 17 and the outer surface of the bottom wall portion 18. More specifically, radially inward stress is exerted evenly in the circumferential direction on a portion of the outer circumferential surface of the cylindrical wall portion 17 which lies closer to the axial end side than the axial position (Y) (the axial position of the axial end edge of the piston seal 25). Additionally, stress directed towards the other axial side is exerted evenly on the outer surface of the bottom wall portion 18. In the case of the first embodiment, since the interior reinforcement body 24 configured in the way described above is provided inside the piston 16, although the stress is exerted as described above, an occurrence of a deformation in the cylindrical wall portion 17 and the bottom wall portion 18 can be prevented effectively.

Namely, the stress exerted on the outer circumferential surface of the cylindrical wall portion 17 is borne by the central reinforcement portion 28 by way of the reinforcement walls 26a, 26b (the combined wall portions 29) and the radially inward continuous walls 27, 27. As this occurs, radial compression stress is exerted on the reinforcement walls 26a, 26b and the radially inward continuous walls 27, 27, while radial compression stress and circumferential tensile stress are exerted on the central reinforcement portion 28. In contrast with this, the stress exerted on the outer surface of the bottom wall portion 18 is borne by the reinforcement walls 26a, 26b, the radially inward continuous walls 27, 27 and the central reinforcement portion 28.

According to the piston 16 of the first embodiment which is configured in the way described above, the flexibility in design can be enhanced, whereby the ensured rigidity and the reduced weight can be made compatible at higher levels.

Namely, in the case of the first embodiment, the configuration is adopted in which the reinforcement walls 26a, 26b which continue to the inner circumferential surface of the cylindrical wall portion 17 and the inner surface of the bottom wall portion 18 exist not in the radial direction, in relation to the pairs of reinforcement walls 26a, 26b which lie adjacent to each other in the circumferential direction, the reinforcement walls 26a, 26b are inclined reversely or in the opposite direction relative to the radial direction, and the radially inward end portions of the reinforcement walls 26a, 26b are connected together (to thereby form the combined wall portions 29 having substantially the V-like shape when seen from the front), and by adopting this configuration, the design of high flexibility is realized. Then, in the case of the first embodiment, by adopting the configuration described above, the lengthwise dimensions of the reinforcement walls 26a, 26b which make up the combined wall portions 29, 29 are made shorter than those of the reinforcement walls 26a, 26b which are arranged in the radial direction as described in the conventional construction shown in Fig. 14, for example, whereby the weight of the piston 16 is reduced. In the pairs of reinforcement walls 26a, 26b which lie adjacent to each other in the circumferential direction, the pair of reinforcement walls 26a, 26b which make up the different combined wall portions 29, 29 are inclined in the directions in which they move away further from each other as they extend radially inwards, and therefore, the second space portions 31, 31 each having a great volume are formed individually between the combined wall portions 29, 29 which lie adjacent to each other in the circumferential direction. Because of this, in the case of the first embodiment, a sufficient weight reduction can be realized. Consequently, even in a case where the radially inward continuous walls 27, 27 and the central reinforcement portion 28 are provided radially inwards of the combined wall portions 29, 29, it is possible to enhance the rigidity while suppressing the increase in overall weight of the piston 16. In the case of the first embodiment, the reinforcement walls 26a, 26b are provided so as to be bifurcated from the radially outer end portions of the radially inward continuous walls 27, 27 which are arranged radially in a similar way to that of the conventional construction. Because of this, compared with a construction in which in place of the reinforcement walls 26a, 26b, the radially inward continuous walls 27, 27 are assumed to be extended radially outwards, the number of portions which support the inner circumferential surface of the cylindrical wall portion 17 can be doubled, and therefore, the rigidity of the piston 16 can be enhanced effectively.

Since the piston 16 is formed into the bottomed cylindrical shape, a great bending moment is exerted on the cylindrical wall portion 17 at the axial end side which continues to the radially outer end portion of the bottom wall portion 18 rather than at the other axial end side. Then, in the case of the first embodiment, the axial thickness-wise dimension of the interior reinforcement body 24 is regulated so as to increase as it extends radially outwards (an inner bottom surface of the piston 16 is formed into a mortar-like shape), whereby the radial thickness-wise dimension of the interior reinforcement body 24 is ensured greatly at the axial end side portion of the cylindrical wall portion 17 on which the great bending moment is exerted. Consequently, in the case of the first embodiment, the ensured rigidity (the suppressed deformation) and the reduced weight can be made compatible at the cylindrical wall portion 17 and the bottom wall portion 18. Additionally, since the large spaces can be ensured in the interior of the piston 16, it is possible to insert a separate member into the piston 16.

The axial position (X) of the other axial end edge of the radially outer end portion of the interior reinforcement body 24 which continues to the inner circumferential surface of the cylindrical wall portion 17 coincides with the axial position (Y) which constitutes the boundary position between the portions where the fluid pressure is borne and the portions where no fluid pressure is borne on the outer circumferential surface of the cylindrical wall portion 17, and the interior reinforcement body 24 is provided only at the radially inward portions of the portions on the outer circumferential surface of the cylindrical wall portion 17 where stress is exerted when braking. This allows the interior reinforcement body 24 (the reinforcement walls 26a, 26b) to be provided only at the portions whose rigidities need to be ensured, whereby the design free from wastefulness is realized. Consequently, it is possible to prevent an occurrence of a deformation in the cylindrical portion 17 effectively while suppressing the increase in weight which would be attributed to the provision of the interior reinforcement body 24 to a minimum level.

### [Second Embodiment]

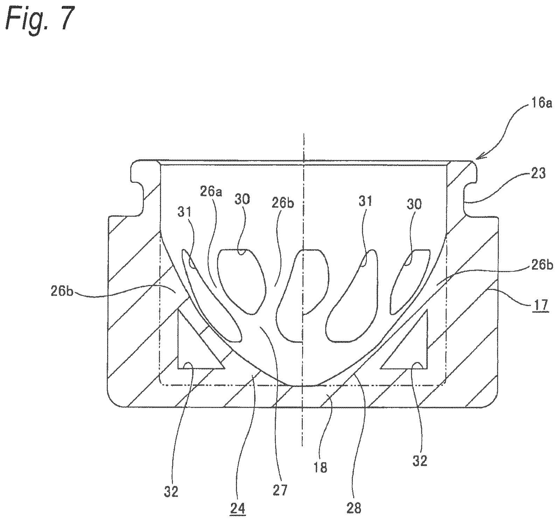

Referring to Fig. 7, a second embodiment of the invention will be described. In the case of the second embodiment, closed spaces 32, 32 of an isosceles triangular shape are provided individually in corner portions of reinforcement walls 26a, 26b, which make up a piston 16a, which exist at portions lying between an axial end portion of a cylindrical wall portion 17 and a radially outer end portion of a bottom wall portion 18. These corner portions have sufficiently high rigidity as a result of being held by the axial end portion of the cylindrical wall portion 17 and the radially outer end portion of the bottom wall portion 18 therebetween, even when the closed spaces 32, 32 are provided in the way described above, an interior reinforcement body 24 can still ensure the sufficient rigidity. Thus, it is possible to reduce the weight of the piston 16a while ensuring the sufficient rigidity.

The piston 16a of the second embodiment which has the closed spaces 32, 32 described above can be fabricated from metallic powder of aluminum alloy or iron-based alloy using a powder sintering method (SLS: Selective Laser Sintering) or can be fabricated using various solid shaping methods for fabricating a three-dimensional solid by laminating a material (for example, a fused deposition modeling method, an inkjet method, a powder binding method, an optical solid shaping method, a laser engineered net shaping (LENS) method, a fused metal deposition method (FDM)). However, in a case where an interior reinforcement body is provided separately from a piston including closed spaces like those described above are formed, the piston can be fabricated without using a special fabricating method by devising a shape for the piston so that closed spaces are formed between the interior reinforcement body and inner surface of the piston.

The other configurations and working effects are the same as those of the first embodiment described above.

### [Third Embodiment]

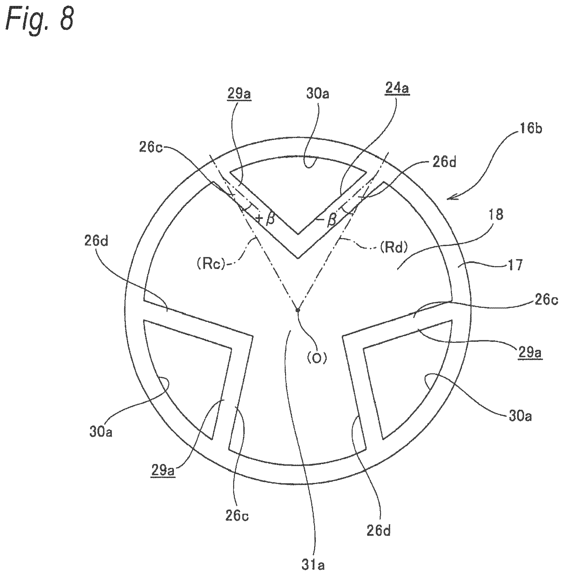

Referring to Fig. 8, a third embodiment of the invention will be described. In the case of the third embodiment, an interior reinforcement body 24a which is provided inside a piston 16b is made up of six reinforcement walls 26c, 26d only. These reinforcement walls 26c, 26d are arranged so as not to exist in a radial direction (radially) which passes through a piston center axis (O) in such a state that radially outboard end portions (lengthwise end portions) thereof continue to an inner circumferential surface of a cylindrical wall portion 17 while axial end portions thereof continue to an inner surface of a bottom wall portion 18.

Specifically speaking, in the total of six reinforcement walls 26c, 26d, three reinforcement walls 26c, 26c are disposed at equal intervals in a circumferential direction while being inclined by a predetermined angle in a predetermined direction relative to the radial direction. In contrast with this, the remaining three reinforcement walls 26d, 26d are disposed at equal intervals in the circumferential direction in such a state that the reinforcement walls 26d, 26d are inclined relative to the radial direction by an angle equal to the angle at which the reinforcement walls 26c, 26c are inclined but in an opposite direction to the direction in which the reinforcement walls 26c, 26c are inclined. More specifically, the reinforcement walls 26c, 26c are provided so as to be inclined by an inclination angle of +β relative to an imaginary line (Rc) in Fig. 8 which denotes the radial direction as they extend radially inward. The reinforcement walls 26d, 26d are provided so as to be inclined by an inclination angle or -β relative to an imaginary line (Rd) in Fig. 8 which denotes the radial direction as they extend radially inward. Then, in pairs of reinforcement walls 26c, 26d, radially inward end portions of pairs of reinforcement walls 26c, 26d which are inclined so as to move towards each other as they extend radially inwards are connected together so as to form combined wall portions 29a, 29a of a V-like shape when seen from the front.

In the case of the third embodiment, as a result of the interior reinforcement body 24a being configured in the way described above, first space portions 30a, 30a and a second space portion 31 a are formed which open to the other axial end side. In these space portions, the first space portions 30a, 30a are formed at portions lying between the pairs of reinforcement walls 26c, 26d which make up the combined wall portions 29a, 29a. The first space portions 30a, 30a have a shape of a triangle with a curved base when seen from the front (an isosceles triangular shape, a fan-like shape) and are disposed so that a vertical angle lies radially inwards while the base lies radially outwards. In contrast with this, the second space portion 31a is made up by continuously combining spaces existing between the circumferentially adjacent combined wall portions 29a, 29a and a space existing radially inwards of the combined wall portions 29a, 29a and has a Y-like shape when seen from the front.

In the case of the third embodiment configured in the way described above, compared with the case of the first embodiment, since the weight of the interior reinforcement body 24a can be reduced and the volume of the second space 31a can be increased, the weight of the interior reinforcement body 24a can be reduced further.

The other configurations and working effects are the same as those of the first embodiment described above.

### [Fourth Embodiment]

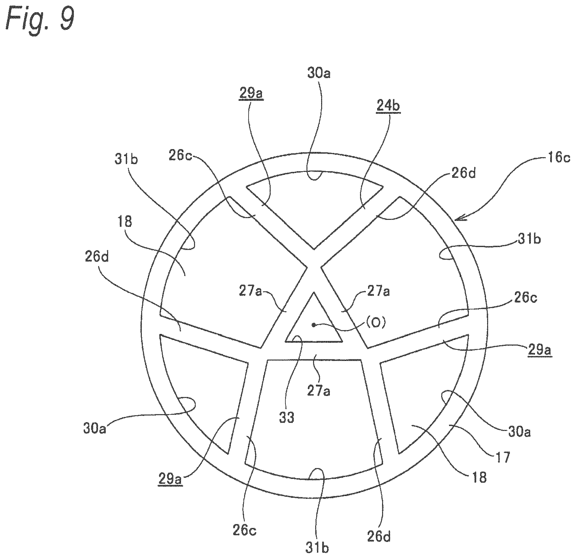

Referring to Fig. 9, a fourth embodiment of the invention will be described. In the case of the fourth embodiment, with a view to increasing the rigidity more than that provided by the construction of the third embodiment, a total of three radially inward continuous walls 27a, 27a are provided so as to continue to connecting portions where radially inward end portions of pairs of reinforcement walls 26c, 26d which make up combined wall portions 29a, 29a are connected together. In the case of the fourth embodiment, circumferential end portions of the radially inward continuous walls 27a, 27a continue to connecting portions (radially inward end portions) of the circumferentially adjacent combined wall portions 29a, 29a. By adopting this configuration, the radially inward continuous walls 27a, 27a are connected into a frame having a regular triangular shape (a frame having a regular polygonal shape) so as to surround a piston center axis (O). Additionally, in the case of the fourth embodiment, second space portions 31 b, 31 b having a substantially rectangular shape when seen from the front are formed individually between the circumferentially adjacent combined wall portions 29a, 29a, and a third space portion 33 having a regular triangular shape when seen from the front is formed inside the radially inward continuous walls 27a, 27a.

In the case of the fourth embodiment configured in the way described above, the rigidity of a piston 16c (an interior reinforcement body 24b) can be increased further. In the case of the fourth embodiment, the connecting portions of the combined wall portions 29a, 29a are made to continue to each other by way of the radially inward continuous walls 27a, 27a. However, the connecting portions of the combined wall portions 29a, 29a can also be made to continue to an outer circumferential edge of a central reinforcement portion having a substantially ring shape (or a circular shape) when seen from the front such as the one described in the first embodiment.

The other configurations and working effects are the same as those of the first and third embodiments described above.

### [Fifth Embodiment]

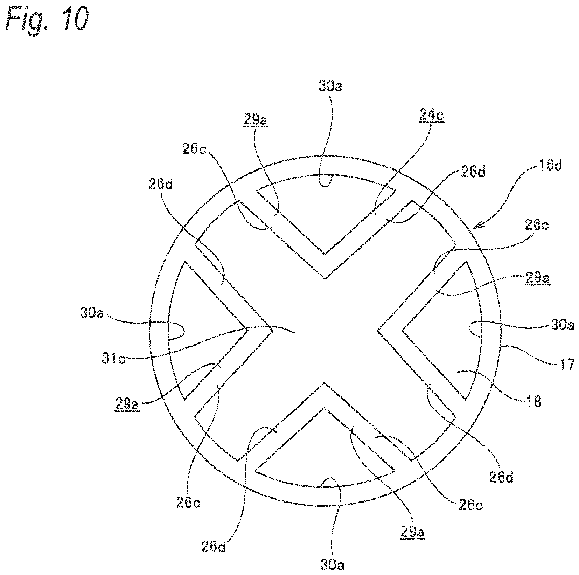

Referring to Fig. 10, a fifth embodiment of the invention will be described. In the case of the third embodiment described above, the interior reinforcement body 24a is described as being made up of the total of three combined wall portions 29a, 29a. However, in the case of the fifth embodiment, an interior reinforcement body 24c is made up of a total of four combined wall portions 29a, 29a. The configuration of a pair of reinforcement walls 26c, 26d which make up the combined wall portion 29a is the same as that of the third embodiment. A second space portion 31 c which is substantially cruciform when seen from the front is provided by combining spaces existing between the circumferentially adjacent combined wall portions 29a, 29a and a space existing radially inwards of the combined wall portions 29a, 29a.

In the case of the fifth embodiment configured in the way described above, compared with the case of the third embodiment described above, the rigidity can be increased. More specifically, since the number of combined wall portions 29a, 29a is increased, the rigidity can be balanced well in relation to the circumferential direction (a generation of portions having high circumferential rigidity and portions having low circumferential rigidity can be made difficult to occur).

The other configurations and working effects are the same as those of the first and third embodiments described above.

### [Sixth Embodiment]

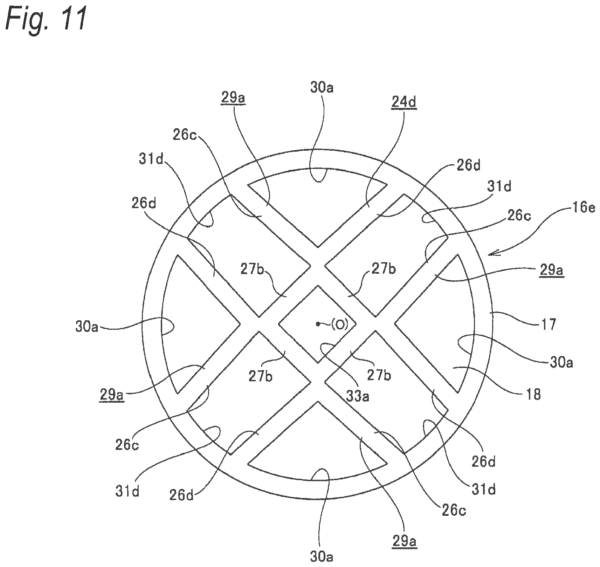

Referring to Fig. 11, a sixth embodiment of the invention will be described. In the case of the sixth embodiment, with a view to increasing the rigidity more than that provided by the construction of the fifth embodiment, a total of four radially inward continuous walls 27b, 27b are provided so as to continue to connecting portions where radially inward end portions of pairs of reinforcement walls 26c, 26d which make up combined wall portions 29a, 29a are connected together. In particular, in the case of the sixth embodiment, circumferential end portions of the radially inward continuous walls 27b, 27b continue to connecting portions (radially inward end portions) of the circumferentially adjacent combined wall portions 29a, 29a. By adopting this configuration, the radially inward continuous walls 27b, 27b are connected into a frame having a rectangular shape (a frame having a regular polygonal shape) so as to surround a piston center axis (O). Thus, an interior reinforcement body 24d is configured into a shape resulting from piling parallel crosses when seen from the front. Additionally, in the case of the sixth embodiment, second space portions 31 d, 31 d having a substantially rectangular shape when seen from the front are formed individually between the circumferentially adjacent combined wall portions 29a, 29a, and a third space portion 33a having a square shape when seen from the front is formed inside the radially inward continuous walls 27b, 27b.

In the case of the sixth embodiment configured in the way described above, the rigidity of a piston 16e (the interior reinforcement body 24d) can be increased further. In the case of the sixth embodiment, the connecting portions of the combined wall portions 29a, 29a are made to continue to each other by way of the radially inward continuous walls 27b, 27b. However, the connecting portions of the combined wall portions 29a, 29a can also be made to continue to an outer circumferential edge of a central reinforcement portion having a substantially ring shape (or a circular shape) when seen from the front such as the one described in the first embodiment.

The other configurations and working effects are the same as those of the first and fifth embodiments described above.

### [Seventh Embodiment]

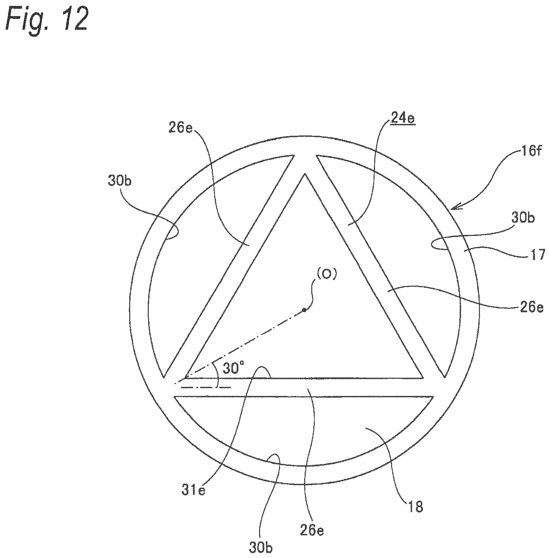

Referring to Fig. 12, a seventh embodiment of the invention will be described. In the case of the seventh embodiment, an interior reinforcement body 24e which is provided inside a piston 16f is made up of a total of three reinforcement walls 26e, 26e. These reinforcement walls 26e, 26e are arranged so as not to exist in a radial direction (radially) which passes through a piston center axis (O) in such a state that lengthwise end portions thereof continue to an inner circumferential surface of a cylindrical wall portion 17. Specifically, the reinforcement walls 26e, 26e are disposed at equal intervals (at intervals of 120°) in a circumferential direction while being inclined by an angle of 30 degrees in a predetermined direction relative to the radial direction. By adopting this configuration, the reinforcement walls 26e, 26e are combined into a frame having a shape of a regular triangle which is inscribed to the cylindrical wall portion 17.

In the case of the seventh embodiment, since the interior reinforcement body 24e is configured in the way described above, first space portions 30b, 30b and a second space portion 31e are formed which open to the other axial end side. In these space portions, the first space portions 30b, 30b are formed at portions lying between the inner circumferential surface of the cylindrical wall portion 17 and outer surfaces of the reinforcement walls 26e, 26e and are formed into a bow shape when seen from the front. In contrast with this, the second space portion 31e is formed inside the interior reinforcement body 24e and is formed into a shape of a regular triangle when seen from the front.

In the case of the seventh embodiment configured in the way described above, the configuration is adopted in which the reinforcement walls 26e, 26e which continue to the inner circumferential surface of the cylindrical wall portion 17 and the inner surface of the bottom wall portion 18 do not exist in the radial direction and in which circumferential end portions of the reinforcement walls 26e, 26e continue to the inner circumferential surface of the cylindrical wall portion 17, and by adopting this configuration, the design of high flexibility is realized. Then, in the case of the seventh embodiment, by adopting the configuration described above, a lengthwise dimension of the reinforcement walls 26e, 26e becomes longer than when they are arranged radially. However, since lengthwise end portions of the reinforcement walls 26e, 26e continue to the inner circumferential surface of the cylindrical wall portion 17, the rigidity can be well balanced in relation to the radial direction of the cylindrical wall portion 17 (a generation of portions having high circumferential rigidity and portions having low circumferential rigidity can be made difficult to occur) although the number of reinforcement walls to be provided becomes smaller than when they are arranged in the radial direction (although only three reinforcement walls are provided as in this embodiment). In addition, since the weight of the interior reinforcement body 24e can be reduced and a great volume can be ensured in the second space portion 31 e, a sufficient reduction in weight can be realized. Consequently, the ensured rigidity and the reduced weight can be made compatible at higher levels. As a modified example of the seventh embodiment, an interior reinforcement body with a frame of a regular quadrangle can also be formed using four reinforcement walls. Additionally, an interior reinforcement body with a frame of a regular pentagon can also be formed using five reinforcement walls.

The other configurations and working effects are the same as those of the first embodiment.

Here, the characteristics of the embodiments of the disc brake device piston according to the invention will briefly be summarized as follows.
[1] A piston (the piston 16 and the pistons 16 to 16f) for a disc brake device, which is fitted in a cylinder space (20) formed in a caliper (19) of the disc brake device so as to move in an axial direction, the piston including:
   a cylindrical wall portion (17) having a cylindrical shape; and
   a bottom wall portion (18) closing an end side of the cylindrical wall portion at one end thereof in the axial direction which lies on a deeper side of the cylinder space (20), wherein
   the piston has a bottomed cylindrical shape as a whole,
   at least three reinforcement walls (26a) are provided so as to continue to an inner circumferential surface of the cylindrical wall portion and an inner surface of the bottom wall portion, to the reinforcement walls exist not in a radial direction which passes through a piston center axis (O), and
   an interior reinforcement body (24), which includes at least the reinforcement walls and is provided radially inwards of the cylindrical wall portion, is rotationally symmetric with respect to the piston center axis as a center thereof.
[2] The piston (the pistons 16, 16b, 16c, 16d, 16e) for a disc brake device according to [1] above, wherein
   radially inward end portions of a pair of the reinforcement walls which are adjacent to each other in a circumferential direction and which are inclined reversely relative to the radial direction are connected together so as to form a combined wall portion (29, 29a).
[3] The piston (the pistons 16, 16c, 16e) for a disc brake device according to [2] above, wherein
   a radially inward continuous wall (27, 27a, 27b) is provided radially inwards of a connection portion of the radially inward end portions of the pair of the reinforcement walls forming the combined wall portion,
   at least one end portion of the radially inward continuous wall continues to the connecting portion, and
   the radially inward continuous wall forms the interior reinforcement body together with the corresponding reinforcement wall.
[4] The piston (the piston 16) for a disc brake device according to [3] above, wherein
   the radially inward continuous wall is disposed in the radial direction which passes through the piston center axis.
[5] The piston (the pistons 16c, 16e) for a disc brake device according to [3] above, wherein
   both end portions of the radially inward continuous wall continue to a pair of the connecting portions which are adjacent to each other in the circumferential direction.
[6] The piston (the piston 16) for a disc brake device according to anyone of [1] to [5] above, wherein
   an axially thickness-wise dimension of the interior reinforcement body from the inner surface of the bottom wall portion gradually increases as the interior reinforcement body extends radially outwards from a center of the bottom wall portion, and
   an axial position (X) of an edge of a radially outer end portion of the interior reinforcement body at the other end thereof in the axial direction which continues to the inner circumferential surface of the cylindrical wall portion is situated in a boundary position (an axial position (Y) of an axial end edge of the piston seal 25) between a portion where a fluid pressure is borne and a portion where no fluid pressure is borne on an outer circumferential surface of the cylindrical wall portion or a position which lies closer to the other axial end side than the boundary position in the axial direction.
[7] The piston (the pistons 16c, 16e) for a disc brake device according to [1] above, wherein
   the reinforcement walls are connected into a frame of a regular polygonal shape,and
   the interior reinforcement body is formed by only the reinforcement walls.
[8] The piston (the piston 16a) for a disc brake device according to anyone of [1] to [7] above, wherein
   a closed space (32) is provided in a corner portion of each of the reinforcement walls which exists at a portion held between an axial end portion of the cylindrical wall portion and a radially outer end portion of the bottom wall portion.

The invention is not limited to the embodiments that have been described heretofore and hence can be modified or improved as required. In addition, the materials, shapes, dimensions, numbers and locations of the constituent elements which are described in the embodiments are arbitrary and are not limited thereto, as long as the invention can be attained.

Additionally, this patent application is based on Japanese Patent Application (No. 2015-085891) filed on April 20, 2015, the contents of which are incorporated herein by reference.

### Industrial Applicability

In carrying out the invention, a two-piece construction may be adopted in which a piston includes a piston main body and a piston cap which is attached to a distal end portion of the piston main body. Additionally, in carrying out the invention, an interior reinforcement body can also be provided separately from a piston including a cylindrical wall portion and a bottom wall portion. As this occurs, a material from which the interior reinforcement body is formed can be different from a material from which the piston is formed. Further, in carrying out the invention, an axial position of the other axial end edge of a radially inward end portion of the interior reinforcement body which continues to an inner circumferential surface of the cylindrical wall portion coincides with an axial position of an axial end edge of a piston seal. However, the invention is not limited to that construction, and hence, the axial position of the other axial end edge of the interior reinforcement body can also be disposed closer to the other axial end side than the axial position of the piston seal. An axial thickness-wise dimension of the interior reinforcement body is not limited to that described in the constructions of the embodiments and hence can be changed as required according to locations, numbers and dimensions of reinforcement walls which make up the interior reinforcement body.

### Description of Reference Numerals

1 disc brake device
2 rotor
3 inboard body portion
4 outboard body portion
5 caliper
6 inboard cylinder space
7 outboard cylinder space
8 inboard piston
9 outboard piston
10 inboard pad
11 outboard pad
12 cylindrical wall portion
13 bottom wall portion
14 projecting portion
15 reinforcement rib
16, 16a, 16b piston
17 cylindrical wall portion
18 bottom wall portion
19 caliper
20 cylinder space
21 pad
22 pressure plate
23 boot groove
24, 24a to 24e interior reinforcement body 25 piston seal
26a to 22e reinforcement wall
27, 27a, 27b radially inward continuous wall
28 central reinforcement portion
29, 29a combined wall portion
30, 30a, 30b first space portion
31, 31 a to 31 e second space portion
32 closed space
33, 33a third space portion.

## Claims

1. A piston for a disc brake device, which is fitted in a cylinder space formed in a caliper of the disc brake device so as to move in an axial direction, the piston comprising:
a cylindrical wall portion having a cylindrical shape; and
a bottom wall portion closing an end side of the cylindrical wall portion at one end thereof in the axial direction which lies on a deeper side of the cylinder space, wherein
the piston has a bottomed cylindrical shape as a whole,
at least three reinforcement walls are provided so as to continue to an inner circumferential surface of the cylindrical wall portion and an inner surface of the bottom wall portion, the reinforcement walls exist not in a radial direction which passes through a piston center axis, and
an interior reinforcement body, which includes at least the reinforcement walls and is provided radially inwards of the cylindrical wall portion, is rotationally symmetric with respect to the piston center axis as a center thereof.

2. The piston for a disc brake device according to Claim 1, wherein
radially inward end portions of a pair of the reinforcement walls which are adjacent to each other in a circumferential direction and which are inclined reversely relative to the radial direction are connected together so as to form a combined wall portion.

3. The piston for a disc brake device according to Claim 2, wherein
a radially inward continuous wall is provided radially inwards of a connecting portion of the radially inward end portions of the pair of the reinforcement walls forming the combined wall portion,
at least one end portion of the radially inward continuous wall continues to the connecting portion, and
the radially inward continuous wall forms the interior reinforcement body together with the corresponding reinforcement wall.

4. The piston for a disc brake device according to Claim 3, wherein
the radially inward continuous wall is disposed in the radial direction which passes through the piston center axis.

5. The piston for a disc brake device according to Claim 3, wherein
both end portions of the radially inward continuous wall continue to a pair of the connecting portions which are adjacent to each other in the circumferential direction.

6. The piston for a disc brake device according to any one of Claims 1 to 5, wherein
an axially thickness-wise dimension of the interior reinforcement body from the inner surface of the bottom wall portion gradually increases as the interior reinforcement body extends radially outwards from a center of the bottom wall portion, and
an axial position of an edge of a radially outer end portion of the interior reinforcement body at the other end thereof in the axial direction which continues to the inner circumferential surface of the cylindrical wall portion is situated in a boundary position between a portion where a fluid pressure is borne and a portion where no fluid pressure is borne on an outer circumferential surface of the cylindrical wall portion or a position which lies closer to the other end side than the boundary position in the axial direction.

7. The piston for a disc brake device according to Claim 1, wherein
the reinforcement walls are connected into a frame of a regular polygonal shape, and
the interior reinforcement body is formed by only the reinforcement walls.

8. The piston for a disc brake device according to any one of Claims 1 to 7, wherein
a closed space is provided in a corner portion of each of the reinforcement walls which exists at a portion held between an axial end portion of the cylindrical wall portion and a radially outer end portion of the bottom wall portion.
